# EUROPÄISCHE PATENTANMELDUNG

(11) **EP 1 765 004 A1**
(43) Veröffentlichungstag der Anmeldung: **21.03.2007**
(21) Anmeldenummer: 06120927.6
(22) Anmeldetag: 19.09.2006
(51) Int. Cl.: H04N 5/232, G03B 17/56

(54) **Optische Visierhilfe**

(30) Priorität: 19.09.2005 DE 102005044632; 29.11.2005 DE 102005057247
(71) Anmelder: Fette, Michael, 50937 Köln (DE)
(72) Erfinder: Fette, Michael, 50937 Köln (DE)
(74) Vertreter: Bungartz, Klaus Peter

(57) **Zusammenfassung**

**Aufgabe**

Die Erfindung betrifft eine optische Visierhilfe für Kameras, die als Filmkamera oder Fotoapparat ausgebildet sind und ein Gehäuse sowie ein Display zur Wiedergabe des aufzunehmenden Motivs aufweisen. Solche Visierhilfen sind derzeit nicht bekannt.

Die Erfindung soll eine Visierhilfe schaffen, die leicht und kostengünstig ist.

**Lösung**

Zur Lösung dieser Aufgabe wird eine Visierhilfe vorgeschlagen, die ein über Befestigungsmittel mit dem Gehäuse lösbar verbindbares, kameraseitiges Halteelement (1) und einen mit dem kameraseitigen Halteelement (1) über zumindest ein Gelenk (2) verbundenen beweglichen Spiegel (3) aufweist, der den Blickwinkel des Betrachters auf das Display umzulenken vermag.

## Beschreibung

### Technisches Gebiet

Die Erfindung betrifft eine optische Visierhilfe für Kameras, die als Filmkamera oder insbesondere als Fotoapparat ausgebildet sind und ein Gehäuse sowie ein Display zur Wiedergabe des aufzunehmenden Motivs aufweisen.

Insbesondere sind die meisten digitalen Kameras heutzutage mit Display ausgestattet, über das neben dem meist ebenfalls noch vorhandenen klassischen Sucher das Motiv anvisiert werden kann. Dies ist insbesondere dann sehr praktisch, wenn ein Blick durch den Sucher aus Platzgründen nicht möglich ist. So ist ein Problem der Kameras, dass bei sehr niedrigen Positionen, etwa zum Aufnehmen von bodennahen Motiven oder auch bei sehr hohen Positionen zum Aufnehmen von Motiven über eine vor dem Fotografierenden befindliche Barriere oder Menschenmenge der Fotografierende das Display wenn überhaupt nur unter einen sehr starken Winkel sehen kann. Weil aber die Display üblicherweise TFT-Displays sind, kann dann kaum das Motiv anvisiert werden, da diese Displays nur bei frontalen Betrachtungen gut ablesbar sind. Ein Blick durch den Sucher ist dabei oft gar nicht oder nur unter sehr erschwerten Bedingungen möglich.

### Stand der Technik

Optische Visierhilfe für Digitalkameras solcher Art sind derzeit nicht bekannt. Es ist lediglich aus dem Bereich der Filmkamera bekannt, das Display schwenkbar zu gestalten. Dies hat aber den Nachteil, dass hierfür besondere Vorkehrungen getroffen werden müssen, die bei vorhandenen Kameras nicht nachrüstbar sind, und dass das schwenkbare Display einem höheren Beschädigungsrisiko ausgesetzt ist.

### Darstellung der Erfindung

### Technische Aufgabe

Aufgabe der Erfindung ist es daher, eine Visierhilfe zu schaffen, die als einfaches und kostengünstiges Zubehörteil die Sicht auf das Display bei ungewöhnlichen Kamerahaltungen ermöglicht.

### Technische Lösung

Diese Aufgabe wird nach der Erfindung dadurch gelöst, dass die Visierhilfe ein über Befestigungsmittel mit dem Gehäuse lösbar verbindbares, kameraseitiges Halteelement und einen mit dem kameraseitigen Halteelement über zumindest ein Gelenk verbundenen beweglichen Spiegel aufweist, der den Blickwinkel des Betrachters auf das Display umzulenken vermag.

### Vorteilhafte Wirkungen

Durch die erfindungsgemäße Ausgestaltung der Visierhilfe ist es nun einfach möglich, auch dann, wenn sich die Kamera in extremen Positionen relativ zum Fotografierenden befindet, das Display einzusehen. Solche extremen Situationen können beispielsweise Bodenaufnahmen sein, bei denen die Kamera etwa nur einige Zentimeter oberhalb des Erdbodens oder einer sonstigen Fläche angeordnet ist, so dass sich der Fotografierende auf den Boden legen müsste, um das Display ablesen zu können. Eine weitere Einsatzmöglichkeit ist gegeben, wenn die Kamera sehr hoch gehalten werden soll, etwa wenn aus einer Zuschauermenge heraus eine Veranstaltung fotografiert werden soll. Auch dann, wenn die K amera seitlich gehalten werden muss, etwa wenn aus einem Fenster heraus die Kamera nach draußen gehalten wird, kann die Visierhilfe nützlich sein.

Ein wesentlicher Einsatzzweck der Visierhilfe ist die untersichtige Anvisierung eines Objektes. Wenn also die Kamera in Bodennähe positioniert ist, kann durch den aufgeklappten Spiegel der Fotografierende über den Spiegeln das Display ablesen. Hierzu ist der Spiegel über das Gelenk beweglich mit dem kameraseitigen Halteelement verbunden. Dieses kameraseitige Halteelement kann über Befestigungsmittel mit dem Gehäuse lösbar verbunden werden. Hierzu wird üblicherweise das Gewinde für die Stativschraube ausgenutzt, das an jedem Kameragehäuse mit genormtem Gewindedurchmesser vorhanden ist.

Bevorzugt ist das kameraseitige Halteelement als flaches Profil ausgebildet, wobei dieses Profil aus Kunststoff oder Metall gefertigt sein kann und entweder eine ebene Form oder auch Sicken zur Versteifung aufweisen kann. Auch alle anderen Formen sind denkbar, wichtig ist nur, dass es über das Befestigungsmittel mit dem Gehäuse verbunden werden kann.

Anstelle der Befestigung über die Stativschraube kann natürlich auch eine andere Befestigung gewählt werden, etwa eine Klemmbefestigung an den Gehäuseecken oder einem sonstigen Bauteil der Kamera. Auch ein Ankleben der Visierhilfe ist eventuell möglich, wobei dies vom Benutzer der Kamera in der Regel nicht gewünscht ist. Um diesen Nachteil des Klebens zu vermeiden, kann möglicherweise auch in Betracht gezogen werden, dass das kameraseitige Halteelement zweistückig ausgebildet ist, wobei ein erster Teil mit dem Kameragehäuse verklebt wird, während ein abnehmbarer Teil mit dem geklebten Teil lösbar verbindbar ist.

Erfindungsgemäß ist das kameraseitige Halteelement mit dem Spiegel über das Gelenk verbunden. Das Gelenk kann ein Scharniergelenk oder auch ein Kugelgelenk sein, dass eine weitere Schwenkrichtung zulässt. Das Gelenk kann mittig oder an einem der Ränder des Gehäuses vorgesehen sein. Eine einfache, kostengünstige Ausgestaltung weist ein flaches, scheibenartiges kameraseitiges Halteelement auf, das einseitig mit dem Gelenk verbunden ist. Dieses wird über eine insbesondere als Schraubverbindung ausgebildete Verbindung mit dem Gehäuse verbunden. Hierzu kann ein geschlossenes oder einseitig offenes Langloch in dem kameraseitigen Halteelement vorgesehen sein, das den Gewindebereich einer Befestigungsschruabe aufnimmt, die nach Anziehen mit ihrem Schraubenkopf das kameraseitige Halteelement an dem Gehäuse festklemmt.

Alternativ oder auch zusätzlich kann aber auch das kameraseitige Halteelement eine Bodenplatte oder Stange sein, die an den Seitenrand des Gehäuses geführt sein kann, wo dann das Gelenk angeordnet ist. Hierdurch kann ein Klappen um eine zum Seitenrand des Gehäuses parallele Achse realisiert werden. Eine weitere Ausgestaltung weist eine Stange parallel zum Seitenrand des Gehäuses auf, auf der das Gelenk verschiebbar und festlegbar gelagert ist. Ist dieses Gelenk dann als Kogelgelenk ausgebildet, ergibt sich eine Verschiebbarkeit und eine Verdrehbarkeit des Spiegel, was eine nahezu beliebige Verstellung erlaubt.

Im einfachsten Fall kann auf die Rückseite des Spiegels ein Spiegelträger geklebt sein, der in das Gelenk übergeht oder an dem Gelenk angebracht ist. Natürlich ist es auch möglich, den Spiegelträger selbst so zu fertigen, dass dieser eine spiegelnde Oberfläche aufweist. In diesem Fall werden dann Spiegelträger und Spiegel von einem gemeinsamen Bauteil gebildet.

Ein wesentlicher weiterer Aspekt der Erfindung ist es, dass die Visierhilfe für eine möglichst große Anzahl von Kameras ohne individuelle Ausgestaltung der Einzelteile verwendbar ist. Da leider die Position des Stativgewindes an der Kameraunterseite nicht genormt ist, weist bevorzugt die Visierhilfe eine Seitenverstellmöglichkeit und oder eine Längsverstellmöglichkeit auf, die es ermöglicht, der Lage der Stativschraube relativ zum Gehäuse Rechung zu tragen, so dass der Spiegel unabhängig von der Position des Stativgewindes in der Lage ist, das Display auf den Blickwinkel des Betrachters abzubilden. Abbilden meint in diesem Zusammenhang, dass der Inhalt des Displays über den Spiegel für den Betrachter sichtbar ist. Diese Verstellmöglichkeiten können sowohl auf Seiten des kameraseitigen Halteelements als auch, alternativ oder zusätzlich, auf Seiten des Spiegelträgers vorgesehen sein.

Eine solche Ausgestaltung ist auch für den Fall nützlich , dass bei bestimmten Kameras das Display an unüblichen Stellen angeordnet sein sollte. Bei vielen Kameras ist das Display der Kamera auf der Rückseite des Gehäuses, im Wesentlichen die gesamte Gehäusefläche abdeckend angeordnet, so dass es ausreichend sein wird, wenn der Spiegel die Gehäuserückseite abbildet. Bei größeren Kameras oder auch bei Filmkameras kann es jedoch sein, dass der Spiegel nicht die gesamte Gehäusefläche einnimmt oder dass das Gehäuse größer ist als es bei den üblichen Digitalkameras der Fall ist.

Der wesentliche Einsatzzweck der Erfindung liegt darin, dass Kameras mit starrem Display nachgerüstet werden können, so dass auch bei diesem starren Display aus anderen Betrachtungswinkeln das Display insbesondere von oben, unten oder einer der Seiten ablesbar ist. Diese Notwendigkeit ist besonders deswegen wichtig, da übliche Digitalkameras TFT-Displays aufweisen, die aus einem anderen Winkel als aus der Senkrechten nur sehr schwer ablesbar sind. Insbesondere wenn Detailaufnahmen gemacht werden sollen, etwa bei Makroaufnahmen in der Natur, ist es dann sehr schwer, das Display abzulesen. Gleiches gilt natürlich dann, wenn der Fotografierende sich sehr weit aus einem Fenster lehnen müsste, um zu vermeiden, dass etwa Gebäudeecken auf dem Gebäude zu erkennen sind. Auch in diesem Fall ist das Display dann sehr schwer abzulesen.

Grundsätzlich soll zunächst die Erfindung aber nicht auf Kameras mit starrem, zum Gehäuse unbeweglichem Display beschränkt sein. Auch bei anderen Kameras, etwa bei üblichen Filmkameras mit dreh- und klappbaren Displays könnte die Erfindung eine zusätzliche Möglichkeit darstellen, das Display anzuschauen.

Weitere Merkmale und Vorteile der Erfindung ergeben sich aus den Unteransprüchen und aus der nachfolgenden Beschreibung bevorzugter Ausführungsbeispiele anhand der Zeichnungen.

### Kurze Beschreibung der Zeichnungen

In den Zeichnungen zeigt:

Fig. 1 eine Draufsicht auf eine erfindungsgemäße Visierhilfe ohne montierten Spiegel,

Fig. 2 eine Seitenansicht der in Fig. 1 dargestellten Visierhilfe,

Fig. 3 eine Draufsicht auf einen Spiegelträger einer besonderen Ausgestaltung der Erfindung (relativ zu Figur 1 verkleinert),

Fig. 4 eine Ansicht von unten auf den Spiegelträger gemäß Fig. 3 und

Fig. 5 eine Seitenansicht auf den Spiegelträger gemäß den Fig. 1 bis 4 im Schnitt.

### Bester Weg zur Ausführung der Erfindung

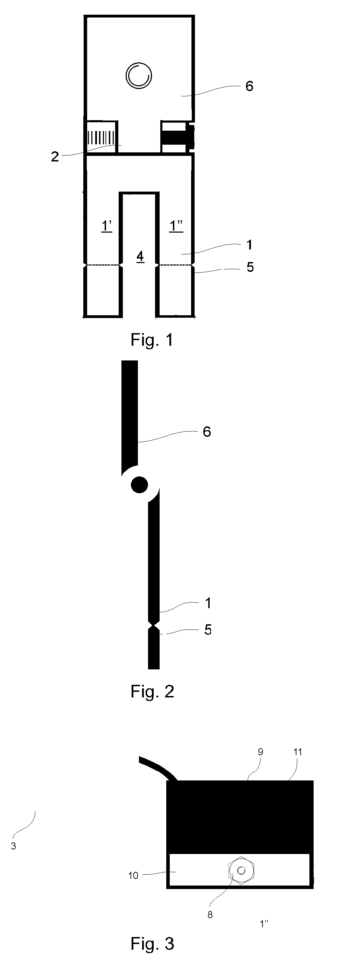

In den Figuren 1 und 2 der hier nicht maßstäblich wiedergegebenen Zeichnungen ist eine erfindungsgemäße Visierhilfe dargestellt. Die Visierhilfe weist ein kameraseitiges Halteelement 1 zur lösbaren Verbindung mit dem Gehäuse einer Filmkamera oder einem Fotoapparat auf. Das kameraseitige Halteelement 1 ist über ein Gelenk 2 mit einem hier nicht dargestellten Spiegel 3 verbindbar. Über das Gelenk 2 kann der Spiegel 3 geklappt werden, so dass der Betrachter aus nahezu beliebigen Blickwinkeln das Display über den Spiegel 3 anschauen kann.

Für untersichtige Aufnahmen kann der Betrachter einfach den Spiegel 3 herunterklappen. Er kann dann auf die Spiegelfläche sehen und so das Display ablesen. Für obersichtige Aufnahmen im Falle von Digitalkameras könnte die Visierhilfe so ausgestaltet sein, dass sie eine Verstellmöglichkeit aufweist. Hierzu könnte möglicherweise zwischen dem kameraseitigen Halteelement 1 und dem Gelenk 2 eine Distanzstange angeordnet sein, über die das Gelenk 2 und damit der Spiegel 3 längs der vertikalen Richtung des Gehäuses der Kamera verschiebbar ist.

Im Falle von Digitalkameras ist diese aufwändige Führung jedoch nicht notwendig. Da das digitale Bild ohnehin am Rechner nachbearbeitet werden kann, wäre es nicht tragisch, wenn die Aufnahme um 180° gedreht erfolgen würde. Zu diesem Zweck kann der Fotografierende die Kamera einfach anders herum halten, so dass das Gelenk 2 an der Oberseite des Kameragehäuses angeordnet ist und er auch eine obersichtige Aufnahme vornehmen kann.

In bevorzugter Weise wird das kameraseitige Halteelement 1 über ein Gewinde zur Befestigung eines Stativs an dem Kameragehäuse befestigt. Dieses Stativgewinde kann an beliebiger Stelle der Unterseite des Kameragehäuses angeordnet sein. Um nicht für jedes Kameragehäuse individuell ein kameraseitiges Halteelement 1 fertigen zu müssen, kann dieses kameraseitige Halteelement 1 einen Längsschlitz 4 aufweisen, über den es in Richtung der Tiefe des Gehäuses verschiebbar mit dem Gehäuse verbindbar ist.

Ist das Display im oberen Bereich der Rückseite angeordnet, würde die kameraseitige Halteaufnahme 1 nicht so tief eingeschoben werden, als wenn das Display im unteren Bereich des Gehäuses angeordnet ist. Über eine Befestigungsschraube, die in das Stativgewinde eingeschraubt wird und das kameraseitige Halteelement 1 zwischen dem Gehäuse und ihrem Schraubenkopf einklemmt, ist das kameraseitige Halteelement 1 dann lösbar mit dem Gehäuse verbindbar. Der Längsschlitz 4 ist bevorzugt einseitig offen ausgebildet, so dass das kameraseitige Halteelement 1 auch bei bereits eingeschraubter Befestigungsschraube einschiebbar ist. In diesem Fall kann die Befestigungsschraube im Stativgewinde verbleiben, auch wenn die Visierhilfe abgenommen ist. Dies bewahrt den Fotografierenden von der Notwendigkeit, ein weiteres Bauteil aufbewahren zu müssen.

Eine bevorzugte Ausgestaltung der Erfindung ist an die Tiefe des Gehäuses anpassbar. Für sehr schmale Kameragehäuse würde dann die Gefahr bestehen, dass das kameraseitige Halteelement 1 über den vorderen Rand des Gehäuses an der Unterseite hervorsteht. Bevorzugt weist daher eine Ausgestaltung des kameraseitigen Halteelements 1 zwei Seitenabschnitte 1' und 1 ", die wenigstens eine quer verlaufende Sollbruchstelle 5 aufweisen, über die die freien Enden der Seitenabschnitte 1' und 1" bei Bedarf verkürzt werden können, so dass sie an die Tiefe des Gehäuses angepasst werden können.

Der Spiegel 3 ist bevorzugt an einem Spiegelhalter 6 befestigt. Der Spiegelhalter 6 ist wiederum selbst mit dem Gelenk 2 verbunden. Auf Grund der Geometrie ist es zweckmäßig, dass der Spiegel 3 im Wesentlichen die Größe des Displays oder auch des Gehäuses aufweist. Bei üblichen Digitalkameras kann der Spiegelhalter 6 so ausgebildet sein, dass er in etwa die Größe der Gehäuserückwand aufweist. An dem Spiegelhalter 6 ist dann ein Spiegel 3 angeordnet, der etwa die Größe des Displays aufweisen kann.

Die optische Visierhilfe kann nun den zusätzlichen Vorteil bieten, dass sie vor die Rückseite des Gehäuses geklappt wird, so dass der Spiegel 3 mit seiner spiegelnden Fläche an dem Gehäuse und dem Display anliegt. Über Abstandshalter kann verhindert werden, dass der Spiegel 3 und das Display hierbei verkratzen. Dieses Anklappen an das Gehäuse hat des weiteren Vorteil, dass auch das Display vor Verkratzen geschützt ist, da nun nach Außen nur die Rückseite des Spiegels 3 bzw. des Spiegelhalters 6 sichtbar ist.

Bei der hier dargestellten Ausgestaltung ist der Spiegel 3 an einem Spiegelträger 11 befestigt, der wiederum an dem Spiegelhalter 6 angebracht ist. Der Spiegelträger 11 kann nun die oben skizzierte Funktion des Abstandshalters zum Display und die Abdeckfunktion übernehmen. Die Verwendung des Spiegelträgers 11 als weiteres Bauteil ist besonders praktisch, da hier ein geeigneter Werkstoff verwendet werden kann, der eine hinreichende Elastizität und damit ein Stoßsicherheit gewährleistet.

Der Spiegelträger 11 ist in Fig. 3 dargestellt. Dieser Spiegelträger 11 kann auf den meist zur Bildung einer größeren Universalität wesentlichen schmaleren Spiegelhalter 6 aufgeschoben werden und dort über eine Schraube befestigt werden. Hierzu ist der Spiegelträger 11 bevorzugt als rechteckiger Hohlkörper ausgebildet. Im dargestellten Ausführungsbeispiel ergibt sich der Hohlkörper erst dann, wenn der Spiegelträger 3 in den Spiegelträger 11 eingesetzt ist. Natürlich kann die vordere Wand des Spiegelträgers 11 auch durchgängig ausgebildet sein, so dass sich in diesem Fall bei aufgesetztem Spiegel 3 eine doppelwandige Ausgestaltung ergibt. Dies ist allerdings nicht notwendig.

Der Spiegelträger 11 ist so ausgebildet, dass ein gelenkseitiges Klappelement, das über das Gelenk 2 an dem kameraseitigen Halteelement 1 befestigt ist, in den Spiegelträger 11 einschiebbar ist. Hierzu weist der Spiegelträger 11 den zur Seite des gelenkseitigen Klappelements hin offenen Innenraum 7 auf. Im dargestellten Ausführungsbeispiel sind das gelenkseitige Klappelement und der Spiegelhalter 6 ein einziges Bauteil. Dies ist aber nicht unbedingt notwendig.

Das gelenkseitige Klappelement ist im dargestellten Ausführungsbeispiel ein flaches, zungenartiges Profil, wobei natürlich auch hier Einprägungen vorhanden sein können. Dieses Profil ist in den Innenraum 7 einsteckbar, wobei die Öffnung des Innenraums als Einsteckschlitz ausgebildet ist. So lässt sich der als Hohlkörper ausgebildete Spiegelträger 11 einfach auf das gelenkseitige Klappelement aufschieben.

Der Spiegelträger 11 ist im dargestellten Beispiel wesentlich schmaler ausgebildet als der rechteckige Hohlkörper. Dies führt dazu, dass der Hohlkörper in Querrichtung relativ zum Spiegelträger 11 verschiebbar ist. Diese Verschiebbarkeit wird hier durch eine Schraubverbindung festgelegt, so dass eine feste und lagetreue Verbindung möglich ist. Über die Verschiebbarkeit kann andererseits die Seitenverstellmöglichkeit realisiert werden.

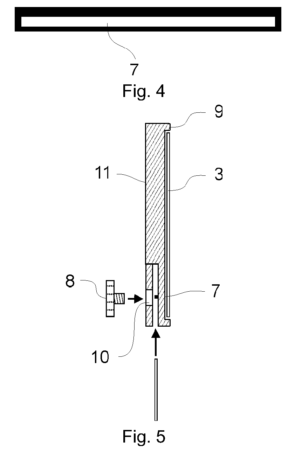

Wie am besten aus Fig. 5 erkennbar ist, erstreckt sich der Hohlraum nur über den unteren Bereich des Spiegelträgers 11. Im oberen Bereich ist der Spiegelträger 11 massiv gefertigt. Im rechten Teil des Spiegelträgers 11 ist in Fig. 5 der Spiegel 3 angeordnet, der in den Rahmen 9 eingeklipst ist. Zur anschaulicheren Darstellung ist die Clipsverbindung hier nicht dargestellt, vielmehr ist ein in der Realität nicht vorhandener Spalt zwischen Spiegel 3 und Rahmen 9 eingezeichnet.

Das gelenkseitige Klappelement wird von unten in den Hohlraum 7 eingeschoben, von links wird dann die Befestigungsschraube 8 eingeschraubt, die mit einem Gewinde in dem gelenkseitigen Klappelement (hier nicht dargestellt) korrespondiert. Hierzu ist in dem Spiegelträger 11 ein Schlitz 10 vorgesehen, so dass das relativ zum Spiegelträger 11 schmalere gelenkseitige Klappelement innerhalb des Hohlraumes 7 zur Bildung einer Seitenverstellmöglichkeit quer verschiebbar ist. Durch Festschrauben der Befestigungsschraube 8 wird diese Verschiebbarkeit dann aufgehoben und das gelenkseitige Klappelement fest mit dem Spiegelträger 11 verbunden. Die Befestigungsschraube 8 ist so gestaltet, dass sie nicht durch das Gewinde in dem gelenkseitigen Klappelement gegen den Spiegel schraubbar ist.

### Weg(e) zur Ausführung der Erfindung

Eine weitere bevorzugte Ausgestaltung des Spiegelträgers 11 weist im oberen, massiven Bereich eine kleine Einstecknut auf, in die zusätzliche Speicherkarten für die Digitalkamera einsteckbar sind. Es können natürlich auch mehrere Einstecktaschen vorgesehen sein, die dann in etwa der Größe einer üblichen Speicherkarte, etwa einer SD-Karte, entsprechen. Alternativ kann natürlich auch eine durch eine Klappe versehene Tasche im oberen Teil des Spiegelträgers 11 vorgesehen sein oder es ist auch möglich, dass die Klappe von dem Spiegel 3 selbst gebildet wird, so dass die Speicherkarte in eine Vertiefung hinter dem Spiegel einlegbar ist. Durch Herausnehmen des Spiegels 3 wäre dann die Speicherkarte zugänglich.

Eine weitere Ausgestaltung, bei der allerdings die Visierhilfe etwas dicker werden wird, verwendet eine abgedeckte Schraube, die erst zugänglich ist, wenn der Spiegel 3 von dem Spiegelträger 11 abgenommen ist. Hierzu ist im unteren Teil des rechteckigen Hohlkörpers die Innenwand mit einer Vertiefung versehen, die parallel zu einem in Querrichtung verlaufenden Schlitz 10 verläuft, der in der Wandung des Hohlkörpers in Querrichtung eingebracht ist. In diesem Schlitz 10 kann die Befestigungsschraube 8 zur Befestigung des gelenkseitigen Seitenelements eingeschraubt werden. Die Vertiefung ist vorgesehen, damit der Schraubenkopf nicht aus der Ebene hervorspringt, so dass der Spiegel 3 ohne Druck auf die Schraube auf den Spiegelträger aufsetzbar ist.

Die Verbindung zwischen Spiegelträger und gelenkseitigen Klappelementes kann neben einer Schraubenverbindung auch über eine andere Verbindungsart erfolgen. Dies kann beispielsweise eine Steckverbindung sein, die durch eine Rastmöglichkeit gegen unbeabsichtigtes Herausziehen gesichert sein kann. Um eine sichere, kippfrei Verbindung zu realisieren ist beispielsweise eine Nut-/Feder-Verbindung möglich, wobei in der Einstecköffnung eine Mehrzahl von parallel zur Einsteckrichtung verlaufenden Nuten angeordnet sein können, während die korrespondierenden Federn dann an dem einzusteckenden Bauteil des gelenkseitigen Klappelementes angeordnet sein können. So kann das relativ zur Einstecköffnung schmalere gelenkseitige Klappelement in verschiedenen Positionen zum Ausgleich der Position des Stativgewindes eingesteckt werden.

Üblicherweise wird die Seitenverstellung nur einmal eingestellt, solange der Benutzer die Visierhilfe für eine spezielle Kamera benutzen möchte. Dies Rastmöglichkeit kann daher so ausgebildet sein, dass sie nur unter Zerstörung der Verbindung wieder lösbar ist. Alternativ kann natürlich ja nach Ausstattungswunsch auch eine federnde Rastverbindung gewählt werden, die ein zerstörungsfreies Entnehmen des gelenkseitigen Klappelementes ermöglicht.

Der Spiegelträger 11 ist kann aus einem elastischen Material gefertigt sein. Dies kann zum Beispiel ein Gummiwerkstoff oder alternativ auch ein elastischer Kunststoff sein, in Frage kommen hier etwa ein ABS- oder ein ABC-Kunststoff. Alternativ kann der Spiegelträger 11 auch ganz oder teilweise aus einem metallischen Werkstoff gefertigt sein.

Bevorzugt weist der Spiegelträger 11 einen umlaufenden Rahmen 9 auf, der relativ zum Spiegel 3 in Richtung des Gehäuses um einige Millimeter hervorspringt. Der von dem Rahmen 9 gebildete Rand kann als Stütze verwendet werden, so dass bei Anklappen des Spiegels 3 an das Gehäuse der Rand einen elastischen Distanzhalter bildet. Dies schützt Display und Spiegel 3 vor Beschädigung und Verkratzen.

Das Gelenk 2 zwischen dem kameraseitigen Halteelement 1 und dem gelenkseitigen Klappelement kann als Scharniergelenk ausgebildet sein. Alternativ kann dieses Gelenk 2 auch als Kugelgelenk ausgebildet sein, so dass sich der Spiegel 3 nicht nur klappen, sondern auch verdrehen lässt. Dies erhöht deutlich die Einsatzmöglichkeit der Visierhilfe. Alternativ zum Kugelgelenk kann auch ein zweites Gelenk Verwendung finden, dass möglicherweise bei einem Distanzstück im Abstand zum ersten Gelenk 2 angeordnet ist.

Eine alternative Ausgestaltung der Erfindung weist einen nur einseitig spiegelnden Spiegel 3 auf, der von der anderen Seite aus durchsichtig ist. Bei dieser Ausgestaltung ist der Spiegelträger 11 dann so gestaltet, dass durch den angeklappten Spiegel 3 hindurch das Display erkennbar ist. Diese Ausgestaltung hätte den Vorteil, dass die Visierhilfe nicht abgenommen werden muss. So wäre ein dauerhafter Schutz des Displays möglich. Selbst wenn dabei die Rückseite des Spiegels 3 Gefahr laufen würde zu verkratzen, etwa weil der Spiegelträger 11 keine transparente Abdeckung aufweist, wäre es wesentlich kostengünstiger und einfacher, den kleinen Spiegel 3 zu ersetzen, als das Display einer Kamera nachzupolieren oder gar auszutauschen.

Um die oben genannte Funktion zu realisieren, kann der Spiegelträger 11 so ausgebildet sein, dass er den Spiegel 3 nur seitlich umfasst. Alternativ kann natürlich auch das Gehäuse des Spiegelträgers 11 transparent gestaltet werden, etwa durch die Verwendung von transparentem Kunststoff.

Eine andere Umsetzung des Erfindungsgedankens sieht ein kameraseitiges Halteelement vor, dass längs des Gehäuses an verschiedenen Positionen befestigt werden kann, um so der Lage des Stativschraubengewindes Rechnung zu tragen. Hierzu weist das kameraseitige Halteelement 1 eine Breite auf, die größer als der gewünschte Verschiebeweg ist, also etwa eine Breite zwischen der halben und der ganzen Gehäusebreite. Hier kann dann in dem kameraseitigen Halteelement 1 ein längs der Gehäuseunterkante verlaufendes Langloch die Befestigungsmöglichkeit an verschiedenen Positionen bieten.

Die Befestigungsschraube zur Befestigung des kameraseitigen Halteelements 1 kann mit einem weiteren Innengewinde versehen sein, so dass trotz der angebrachten Visierhilfe nach wie vor ein Stativ angeschraubt werden kann.

Die zuvor beschriebenen Ausgestaltungen stellen bevorzugte Anwendungen der Erfindung dar. Der Anwendungsbereich der Erfindung soll jedoch hierauf nicht eingeschränkt sein. Insbesondere sind die beiliegenden Zeichnungen nicht maßstäblich, so dass aus Größenverhältnissen keine Einschränkung der Anwendung der Erfindung hergeleitet werden kann.

**Bezugszeichenliste:**

1 Kameraseitiges Halteelement

1' Erster Seitenabschnitt des kameraseitigen Halteelements

1" Zweiter Seitenabschnitt des kameraseitigen Halteelements

2 Gelenk

3 Spiegel

4 Längsschlitz im kameraseitigen Halteelement

5 Sollbruchstelle

6 Spiegelhalter

7 Innenraum des Hohlkörpers

8 Befestigungsschraube

9 Rahmen

10 Schlitz in der Wandung des Spiegelträgers

11 Spiegelträger

## Patentansprüche

1. Optische Visierhilfe für als Filmkamera oder Fotoapparat ausgebildete Kameras, die ein Gehäuse und ein Display zur Wiedergabe des aufzunehmenden Motivs aufweisen, wobei die Visierhilfe ein über Befestigungsmittel mit dem Gehäuse lösbar verbindbares, kameraseitiges Halteelement (1) und einen mit dem kameraseitigen Halteelement (1) über zumindest ein Gelenk (2) verbundenen beweglichen Spiegel (3) aufweist, der den Blickwinkel des Betrachters auf das Display umzulenken vermag.

2. Optische Visierhilfe für Kameras mit einem Gewinde zur Befestigung eines Stativs und nach Anspruch 1, **dadurch gekennzeichnet, dass** das kameraseitige Halteelement (1) einen Längsschlitz (4) aufweist, wobei das kameraseitige Halteelement (1) über ein in das Gewinde zur Befestigung des Stativs eingeschraubte Befestigungsschraube an dem Gehäuse befestigbar ist, die das kameraseitige Halteelement (1) zwischen ihrem Kopf und einem Teil des Gehäuses einklemmt. und der Längsschlitz (4) in dem kameraseitigen Halteelement (1) einseitig offen und unter den Kopf der Befestigungsschraube schiebbar ist.

3. Optische Visierhilfe nach dem vorhergehenden Anspruch, **dadurch gekennzeichnet, dass** das kameraseitige Halteelement (1) als dünnes, plattenartiges Element ausgebildet ist und der Längsschlitz (4) von zwei neben dem Längsschlitz (4) angeordneten Seitenabschnitten (1',1") gebildet ist, wobei in den Seitenabschnitten (1',1 ") zur Anpassung an das Gehäuse einer speziellen Kamera wenigstens jeweils eine Sollbruchstelle (5) angeordnet ist, über die das freie Ende der Seitenabschnitte (1',1") bei Bedarf zur Anpassung an die Gehäusegröße verkürzbar ist.

4. Optische Visierhilfe nach einem der vorhergehenden Ansprüche, **dadurch gekennzeichnet, dass** der Spiegel (3) eine Größe aufweist, die im wesentlichen der Standardgröße handelsüblicher Displays oder Kameragehäuse entspricht und dass die Visierhilfe derart ausgestaltet ist, dass der Spiegel (3) das Display abdeckend und an dem Display anliegend an das Gehäuse der Kamera anklappbar ist.

5. Optische Visierhilfe nach einem der vorhergehenden Ansprüche, **dadurch gekennzeichnet, dass** der Spiegel (3) an einem Spiegelhalter (6) befestigt ist, der mit dem Gelenk (2) verbunden ist, wobei der Spiegelhalter (6) ein mit dem Gelenk (2) verbundenes, gelenkseitiges Klappelement aufweist, an dem der Spiegel (3) unmittelbar oder einen Spiegelträger (11) befestigt ist.

6. Optische Visierhilfe nach dem vorhergehenden Anspruch, **dadurch gekennzeichnet, dass** der Spiegelträger (11) als rechteckiger Hohlkörper mit einem an zu einer Seite hin offenen Innenraum (7) ausgebildet ist, wobei das gelenkseitige Klappelement in den Innenraum (7) einschiebbar ist und das gelenkseitige Klappelement als flaches, zungenartiges Profil und der Innenraum als Einsteckschlitz ausgebildet sind, wobei der Spiegelträger (11) über ein, insbesondere als Schraube ausgebildetes Befestigungselement mit dem gelenkseitigen Klappelement verbunden ist und das gelenkseitige Klappelement als flaches, zungenartiges Profil und der Innenraum als Einsteckschlitz ausgebildet sind, wobei das gelenkseitige Klappelement mit dem zungenartigen Profil über eine Klebe- und/oder Klemmverbindung in dem Einsteckschlitz gehalten ist.

7. Optische Visierhilfe nach einem der vorhergehenden Ansprüche, **dadurch gekennzeichnet, dass** der Hohlkörper im unteren Bereich des Spiegelträgers (11) angeordnet ist und der Spiegelträger (11) oberhalb des Hohlkörpers (7) einen massiven Bereich aufweist, wobei zum Einklemmen des gelenkseitigen Klappelementes die Befestigungsschraube (8) von der dem Spiegel (3) abgewandten Seite in den Hohlkörper (7) eingeschraubt ist.

8. Optische Visierhilfe nach einem der vorhergehenden Ansprüche, **dadurch gekennzeichnet, dass** sie eine Seitenverstellmöglichkeit aufweist, wobei über die Seitenverstellmöglichkeit der Spiegel (3) zum Ausgleich der Position der Befestigung des kameraseitigen Halteelements (1) an dem Gehäuse zumindest in zur unteren Gehäuselängskante paralleler Richtung verschiebbar ist.

9. Optische Visierhilfe nach dem vorhergehenden Anspruch, **dadurch gekennzeichnet, dass** die Seitenverstellmöglichkeit von der Verbindung des Spiegelträgers (11) mit dem kameraseitigen Halteelement gebildet ist, wobei der Spiegelträger (11) einen in Längsrichtung verlaufenden, vom Innenraum (7) in Richtung des Spiegels (3) durchgängigen Schlitz (10) und zwischen dem Schlitz (10) und dem Spiegel (3) eine zum Schlitz (10) deckungsgleiche und nach oben und unten ausgedehnte, in die Wandung eingebrachte Vertiefung als Kopfaufnahme für die Aufnahme des Kopfes der durch den Schlitz (10) in das gelenkseitige Klappelement unter Einklemmen der Wandung geschraubten Befestigungsschraube (8) aufweist.

10. Optische Visierhilfe nach einem der vorhergehenden Ansprüche, **dadurch gekennzeichnet, dass** zwischen dem kameraseitigen Halteelement (1) und dem Spiegel (3) wenigstens ein Distanzstück angeordnet ist, das einseitig über das Gelenk (2) mit dem kameraseitigen Halteelement (1) um an einer anderen Seite über ein Zusatzgelenk mittelbar oder unmittelbar mit dem Spiegel (3) verbunden ist, wobei das Gelenk (2) und/oder das Zusatzgelenk als Kugelgelenk oder als Scharniergelenk ausgebildet ist.

11. Optische Visierhilfe nach einem der vorhergehenden Ansprüche, **dadurch gekennzeichnet, dass** der Spiegel (3) von der der Kamera abgewandten Seite aus gesehen durchsichtig ist, wobei die Visierhilfe derart ausgebildet ist, dass bei auf das Display geklapptem Spiegel (3) das Display durch den Spiegel (3) sichtbar ist.
